# EUROPÄISCHE PATENTSCHRIFT

(11) **EP 1 525 401 B1**
(45) Veröffentlichungstag und Bekanntmachung des Hinweises auf die Patenterteilung: **21.11.2012**
(21) Anmeldenummer: 03740466.2
(22) Anmeldetag: 18.07.2003
(51) Int. Cl.: F16B 21/02, F25D 23/06

(54) **Kältegerät mit einem Innenbehälter und einem Befestigungselement zum Befestigen einer Teleskopschiene am Innenbehälter**
Refrigeration appliance with an inner container and fastening device for fastening a telescopic rail to the inner container
Appareil de réfrigération avec compartiment intérieur et dispositif de fixation pour fixer un rail téléscopique au compartiment intérieur

(30) Priorität: 22.07.2002 DE 10233217
(43) Veröffentlichungstag der Anmeldung: 27.04.2005
(73) Patentinhaber: BSH Bosch und Siemens Hausgeräte GmbH, 81739 München (DE)
(72) Erfinder: KENTNER, Wolfgang, 89365 Röfingen (DE); LAIBLE, Karl-Friedrich, 89129 Langenau (DE)
(86) Internationale Anmeldenummer: PCT/EP2003/007832
(87) Internationale Veröffentlichungsnummer: WO 2004/010012

(56) Entgegenhaltungen:
- DE-A- 2 004 292
- US-A- 2 626 773
- US-A- 4 386 949
- US-A- 5 238 299

## Beschreibung

Die vorliegende Erfindung betrifft ein Kältegerät mit einem Innerbehälter und einem Befestigungselement zur Befestigung einer Teleskopschiene an dem Innenbehälter.

Das Problem, Gegenstände an einer dünnen oder wenig tragfähigen. Wand befestigen zu müssen, stellt sich u.a. im Kältegerätebau. Die Gehäuse moderner Kältegeräte sind im allgemeinen aufgebaut aus einer Außenwand aus Blech oder Kunststoff und einem einteilig aus Kunststoffplatine tiefgezogenen Innenbehälter, die zwischen sich einen Hohlraum begrenzen, der mit thermisch isolierendem Schaummaterial ausgefüllt wird. Innenraumeinbauten eines solchen Kältegeräts müssen am Innenbehälter befestigt oder abgestützt werden, wobei sich das Problem stellt, die Last dieser Einbauten so in den Gehäusekorpus, bestehend aus Innenbehälter, Wärmeisolationsschicht und Außenverkleidung, einzuleiten, dass der Innenbehälter nicht überlastet und dadurch beschädigt wird.

Teleskopauszüge für Kühlgutträger müssen an einem solchen Innenbehälter so befestigt sein, dass sie nicht unbeabsichtigt vollständig herausgezogen werden können und im ausgezogenen Zustand nicht vornüber kippen können. Dies ist z.B. möglich, indem die Teleskopauszüge an den Wänden des Innenbehälters unter Zuhilfenahme von wärmeisolationsseitigen Hinterlegteilen festgeschraubt werden. Da die gesamte Last der Kühlgutträger an den Schrauben auf die Wand übertragen werden muss, ergeben sich lokal hohe Belastungen. Eine Überbeladung der Kühlgutträger kann daher zu einer Beschädigung des Innenbehälters führen, die kaum wirtschaftlich reparabel ist.

Um die Gefahr einer Beschädigung des Innenbehälters zu verringern, sind Aufhängungen für Teleskopschienen mit dem Ziel entwickelt worden, die Belastung besser auf die Wand des Innenbehälters zu verteilen. Derartige Aufhängungen haben eine Vielzahl von Teilen und sind aufwendig zu montieren.

Die US 2 626 773 beschreibt ein Befestigungselement zur Befestigung eines Bodens an der Wand eines Kältegerätes, wobei der Boden mittels einer Schürze von der Wand auf Abstand gehalten wird.

US 5 238 299 B offenbart eine Kabeldurchführung mit einer elastischen Schürze, die das Befestigungselement von der ausgeschäumten Seite gegen einen Innenbehälter des Kältegeräts abstützt und abdichtet.

Ziel der vorliegenden Erfindung ist, ein Befestigungselement zu schaffen, das es ermöglicht, schwere Lasten an dem Innenbehälter eines Kalteperäts, d.h. an einer Wand mit geringer Tragfähigkeit abzustützen, und das einfach und preiswert und mit geringer Teilezahl herzustellen und schnell zu montieren ist.

Die Aufgabe wird gelöst durch ein Kältegerät mit den Merkmalen des Anspruchs 1.

Das erfindungsgemäße Befestigungselement des beanspruchten Kaltegeräts kann montiert werden, indem sein Kopf durch eine unrunde Durchbrechung der Wand hindurch gesteckt wird, bis die Schürze an einer ersten Seite der Wand anliegt, und anschließend um seine Achse gedreht wird, so dass die Vorsprünge des Kopfes über die Durchbrechung seitlich hinausgreifen und an der zweiten Seite der Wand anliegen. Auf diese Weise wird die Wand zwischen den Vorsprüngen des Kopfes auf der einen Seite und der Schürze auf der anderen Seite eingeklemmt. Je größer der Durchmesser des Kopfes ist, d.h. um so weiter die Vorsprünge voneinander entfernt sind, um so größer ist auch das maximale Hebelmoment, das auf das Befestigungselement einwirken kann, bevor es zu einer Beschädigung der Wand kommt.

Die Schürze ist elastisch, so dass auch bei streuenden Wanddicken ein fester Sitz des Trägers erreichbar ist.

Wenn die Schürze die Durchbrechung vollständig abdeckt, wird gleichzeitig eine Dichtwirkung erreicht. Dies ist besonders vorteilhaft, wenn die Wand der Innenbehälter eines Kältegeräts ist, da dann die Schürze beim Ausschäumen des Gehäuses des Kältegeräts den Durchtritt von Schaum in dessen Innenraum verhindern kann.

Eine Aufhängung für den zu befestigenden Gegenstand, d.h. für die Teleskopschiene eines Kälteperäts ist vorzugsweise an dem die Durchbrechung durchgreifenden Kopf angebracht, d.h. das Befestigungselement wird von derjenigen Seite der Wand aus montiert, die der Seite gegenüberliegt, an der der aufzuhängende Gegenstand montiert werden soll. Auch dies ist beim Kältegerätebau vorteilhaft, da das Befestigungselement von der besser zugänglichen Außenseite des Innenbehälters her montiert werden kann.

Die Schürze des Befestigungselements kann einteilig mit dem Kopf ausgebildet sein. Falls der Fuß des Befestigungselements zweiteilig aus einem Kern und einem den Kern überdeckenden Gehäuse ausgebildet ist, kann die Schürze auch an dem Gehäuse angebracht sein, oder sowohl der Kern als auch das Gehäuse können eine Schürze aufweisen.

Vorzugsweise sind der Kern und das Gehäuse aneinander verrastet. Dabei weist der Kern vorzugsweise wenigstens einen Rastarm auf, der eine Öffnung in einer Rückwand des Gehäuses durchgreift. Um eine befriedigende Dichtheit der Öffnung im verrasteten Zustand zu erreichen, ist an den Rastarm vorzugsweise eine Schulter angeformt, die im verrasteten Zustand die Öffnung versperrt.

Teleskopschienen für den Einsatz in Kältegeräten weisen herkömmlicherweise zwei Befestigungshaken an ihrer Rückseite auf, einen vertikal orientierten zum Verankern an einem türnahem Bereich der Seitenwand eines Innenbehälters und einen horizontalen zum Verankern in einem der Rückwand benachbarten Bereich der Seitenwand. Um solche Teleskopschienen an der erfindungsgemäßen Befestigungsanordnung befestigen zu können, ist der Kopf eines solchen Befestigungselements erfindungs gemäß mit einer Einführöffnung zum Einführen eines solchen Hakens versehen.

Die Einführöffnung des Kopfes des Befestigungselements, insbesondere des Befestigungselements für den vertikalen Haken, ist zweckmäßigerweise seitlich von einem elastisch ins Innere des Kopfes verdrängbaren Verriegelungskörper begrenzt. Dieser wird beim Einführen des Hakens zunächst in den Kopf zurückgedrängt, springt aber in seine Ursprungsposition zurück, sobald der Haken seine Zielposition erreicht hat, und verhindert so ein ungewolltes Lösen des Hakens vom Kopf.

Der Verriegelungskörper ist vorzugsweise mit dem Kopf durch eine haarnadelförmige Feder verbunden, deren zwei Schenkel sich im wesentlichen parallel zu der Achse, d..h senkrecht zur Wand, in der das Befestigungselement montiert wird, erstrecken. Eine solche Feder kann leicht einteilig mit dem Kopf und dem Verriegelungskörper durch Spritzguss geformt werden.

Weitere Merkmale und Vorteile der vorliegenden Erfindung ergeben sich aus der nachfolgenden Beschreibung von Ausführungsbeispielen mit Bezug auf die beigefügten Figuren. Es zeigen:
- Fig. 1: eine perspektivische Ansicht eines Innenbehälters eines Kältegeräts mit an erfindungsgemäßen Befestigungselementen gehalterten Teleskopschienen;
- Fig. 2: eine zu Fig. 1 analoge Ansicht des Innenbehälters mit an den Teleskopschienen montierten Kühlgutträgern;
- Fig. 3: eine Teleskopschiene an einer Wand des Innenbehälters, unter Weglassung der Befestigungselemente;
- Fig. 4: die gleiche Teleskopschiene, diesmal zusammen mit den Kernen von zwei Befestigungselementen;
- Fig. 5: eine perspektivische Ansicht eines Teils eines zweiteiligen Befestigungselements;
- Fig. 6: die gleiche Teleskopschiene wie in Figs. 3 und 4, diesmal mit an den Befestigungsanordnungen montierten Gehäusen;
- Fig. 7: eine perspektivische Schnittdarstellung des vorderen Befestigungselements aus Fig. 6, ohne Wand und Teleskopschiene;
- Fig. 8: das Befestigungselement aus Fig. 7 mit davor positionierter Teleskopschiene;
- Fig. 9: das Befestigungselement im Eingriff mit der Teleskopschiene
- Fig. 10: eine weitere teilgeschnittene Darstellung des Befestigungselements aus Fig. 7;
- Fig. 11: eine perspektivische Ansicht eines Teils des hinteren Befestigungselements aus Fig. 6;
- Fig. 12: eine perspektivische geschnittene Ansicht des hinteren Befestigungselements aus Fig. 6;
- Fig. 13: eine Draufsicht auf einen Abschnitt einer Wand mit zwei Durchbrechungen; und
- Fig. 14: eine. Draufsicht auf den Abschnitt der Wand mit in den Durchbrechungen montierten Befestigungselementen.

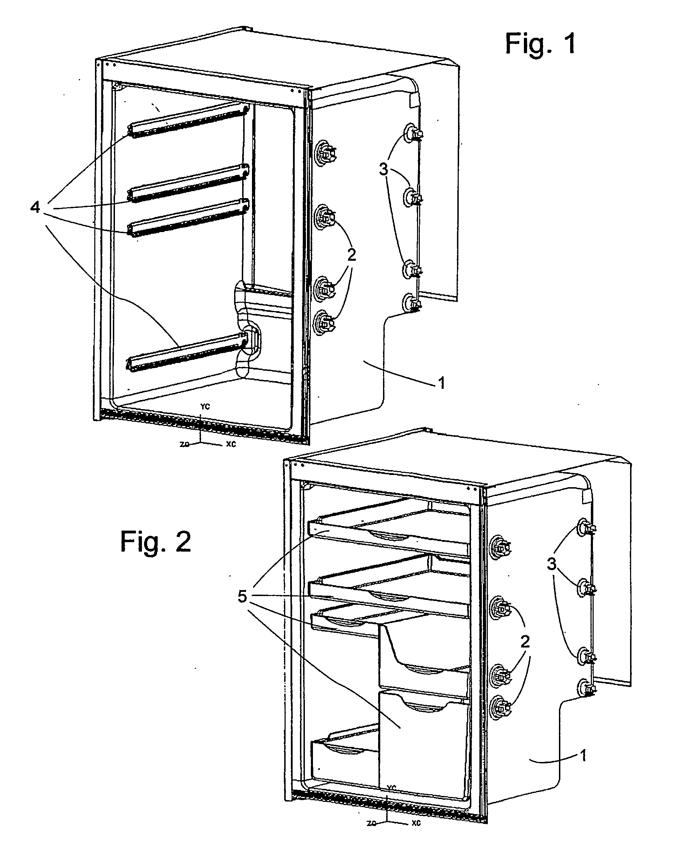

Fig. 1 zeigt eine perspektivische Ansicht von Teilen eines Innenbehälters 1 eines Kältegeräts, b ei dem d as e rfindungsgemäße B efestigungselement z um Einsatz k ommt. An den Seitenwänden des Innenbehälters 1 sind jeweils paarweise in unterschiedlichen Höhen vordere bzw. hintere Befestigungselemente 2, 3 angebracht, die jeweils zu zweit eine Teleskopschiene 4 tragen. An der dem Betrachter zugewandten Seitenwand des Innenbehälters 1 sind jeweils nur die außen liegenden Füße der Befestigungselemente 2, 3, nicht aber die von ihnen gehaltenen, von der Wand verdeckten Teleskopschienen zu sehen; an der vom Betrachter abgewandten Seitenwand sind nur die Teleskopschienen 4 sichtbar, aber nicht deren Befestigungselemente. Die Teleskopschienen 4 dienen zur Halterung von herausziehbaren Kühlgutträgern 5, wie in Fig. 2 gezeigt.

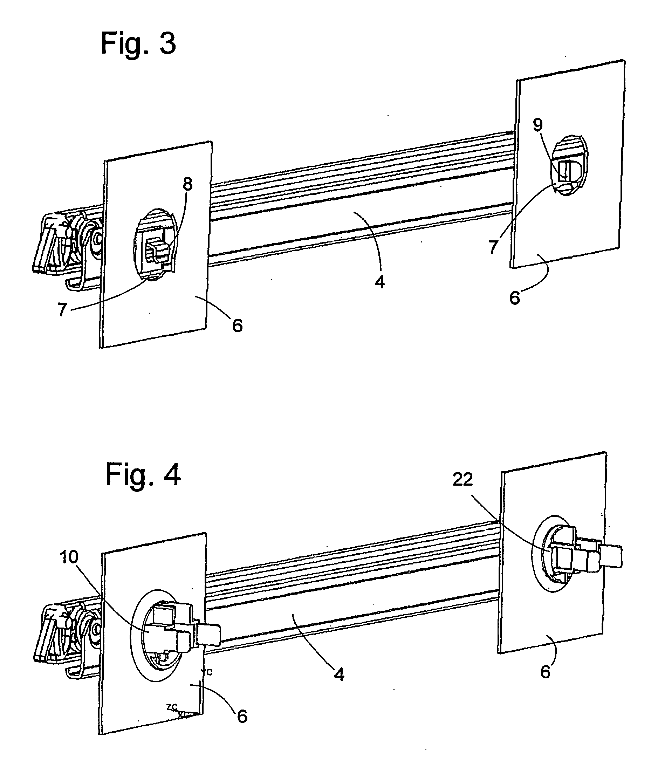

Fig. 3 zeigt in der Perspektive der Figs. 1 und 2 eine Teleskopschiene 4 an der dem Betrachter zugewandten Seitenwand 6 des Innenbehälters 1, wobei, um die Teleskopschiene zeigen zu können, die Seitenwand 6 in der Darstellung auf zwei Abschnitte reduziert ist. Diese Abschnitte weisen jeweils eine Durchbrechung 7 in Höhe von Befestigungshaken 8, 9 der Teleskopschiene 4 auf. Der vordere Befestigungshaken 8 ist nach unten gerichtet, der hintere 9 ist der Rückwand des Innenbehälters 1 zugewandt. Die Querschnittsform der Durchbrechungen 7 setzt sich zusammen aus vier konzentrischen Kreissegmenten, wobei einander gegenüberliegende Kreissegmente jeweils gleichen Radius und benachbarte Kreissegmente unterschiedlichen Radius haben.

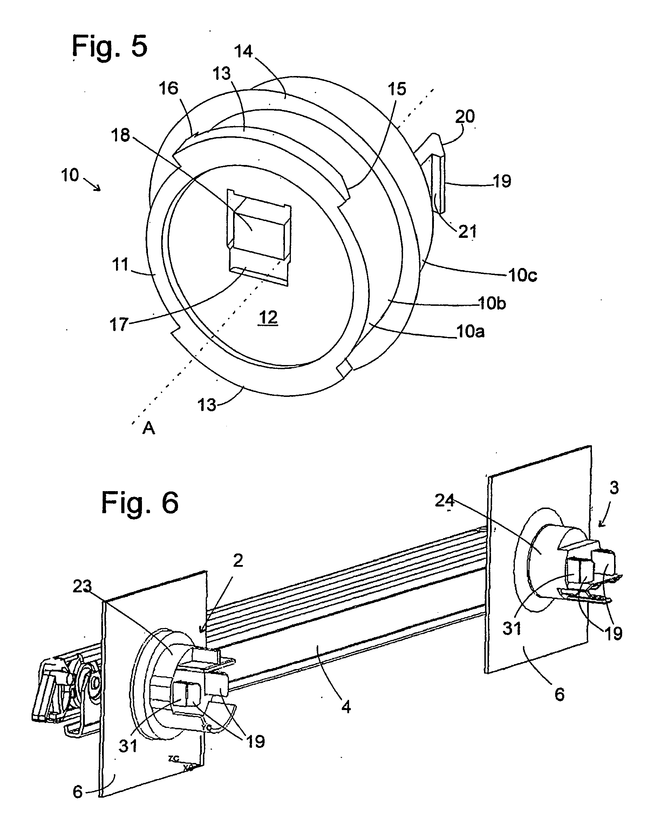

Ein erstes Teil 10 des Befestigungselements 2, im Folgenden als Innenteil bezeichnet, das zur Anbringung in der in Fig. 3 vorne liegenden Durchbrechung 7 vorgesehen ist, ist in Fig. 5 gezeigt. Das Innenteil 10 hat einen becherartigen Körper mit einer zylindrischen Außenwand 11 und einer Stirnwand 1 2, die im montierten Zustand d es Kerns 1 0 dem Inneren des Innenbehälters 1 zugewandt ist. Der Radius der zylindrischen Außenwand 11 entspricht dem kleineren der zwei Radien der Durchbrechung 7. Das Innenteil 10 gliedert sich in Richtung der Achse in drei Abschnitte, einen dem Betrachter zugewandten Kopf 10a, einen Hals 10b und einen Kern 10c, die vorgesehen sind, um im montierten Zustand des Innenteils an der Innenseite der Seitenwand 6, in der Seitenwand 6 bzw. an deren Außenseite zu liegen.

Der Kopf 10a, in Höhe der Stirnwand 12, trägt an seinem zylindrischen Umfang zwei von der Außenwand 11 in radialer Richtung abstehende stegförmige Vorsprünge 13. Die Vorsprünge 13 haben eine kreisbogenförmige Außenkontur, wobei der Radius der Außenkontur dem größeren der zwei Radien der Durchbrechung 7 entspricht, so dass der Kopf 10a in einer gegen die in Fig. 5 gezeigte Orientierung um 90° verdrehten Orientierung durch die Durchbrechung 7 hindurch gesteckt werden kann.

Der Kern 10c trägt eine sich rings um die Außenwand 11 erstreckende kegelförmige Schürze 14. Die Basis des Kegels ist den Vorsprüngen 13 zugewandt. Die Schürze 14 ist dünnwandig, so dass sie im Gegensatz zur Außenwand 11 und den Vorsprüngen 13 in gewissem Umfang elastisch verformbar ist. Der Abstand zwischen den Vorsprüngen 13 und der Schürze 14, d. h. die Länge des Halses 10b, ist geringfügig kleiner als die Dicke der Wand 6, so dass beim Hindurchstecken des Kopfes 10a durch die Durchbrechung 7 die Schürze 14 elastisch flachgedrückt werden muss, bevor die Vorsprünge 13 die Innenseite der Wand 6 erreichen und durch Verdrehen des Kopfes 10a an ihr in Eingriff gebracht werden können.

Um das Hindurchführen des Kopfes 10a entgegen der Federkraft der Schürze 14 zu erleichtern, können, wie in der Fig. 5 gezeigt, die Vorsprünge 13 jeweils an einem Ende mit einer Abschrägung 15 versehen sein. Eine der Schürze 14 zugewandte Verdickung 16 am anderen Ende der Vorsprünge 13 bildet einen Anschlag, der die Orientierung des Innenteils 10 nach dem Festdrehen in der Wand 6 definiert.

In der Stirnwand 12 ist eine Aufnahmeöffnung 17 gebildet, die vorgesehen ist, um den vorderen Befestigungshaken 8 der Teleskopschiene 4 darin zu verrasten. Die Aufnahmeöffnung 17 ist nur in ihrem unteren Bereich frei, ein oberer Bereich ist von einem Verriegelungskörper 18 eingenommen, dessen Funktion später erläutert wird.

An der Rückseite des Kerns 10c sind zwei Rastarme 19 angeformt, von denen in Fig. 5 nur einer zu sehen ist. Die Rastarme 19 haben Rasthaken mit voneinander abgewandten Schrägflächen 20 und Einhakflächen 21.

Fig. 4 zeigt das Innenteil 10 und ein ähnlich aufgebautes Innenteil 22 des hinteren Befestigungselements 3, jeweils in an der Wand 6 montierter Stellung.

In Fig. 6 sind die zwei Befestigungsteile 2, 3 jeweils durch Aufstecken eines Gehäuses 23 bzw. 24 auf die Rastarme 19 komplettiert.

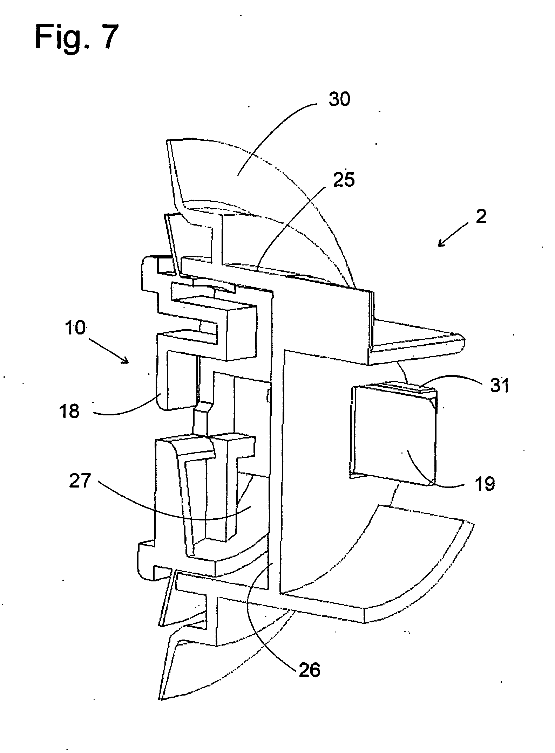

Die Struktur des Gehäuses und seine Verbindung mit dem Kern ist in Fig. 7 exemplarisch anhand des vorderen Befestigungselements 2 dargestellt. Fig. 7 zeigt das vordere Befestigungselement 2 unter Weglassung der Wand 6 im Schnitt entlang seiner Mittelebene.

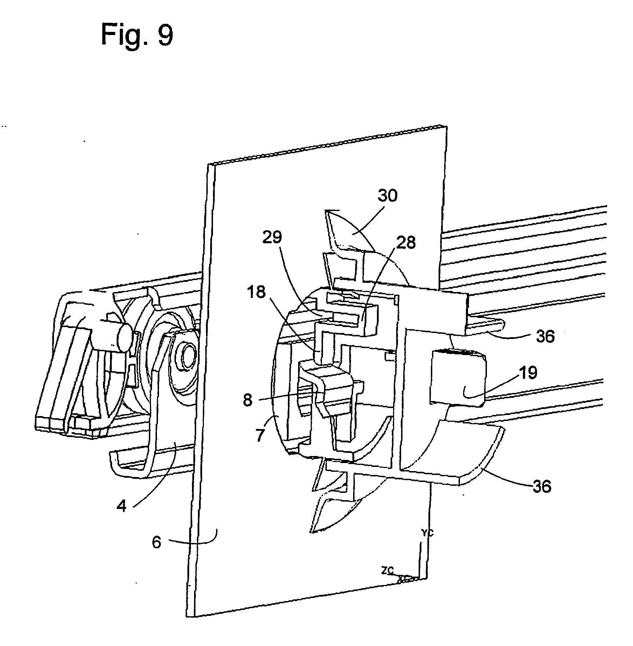

Das Gehäuse 23 hat wie der Kern 10 eine zylindrische Außenwand 25, die mit einer Rückwand 26 eine Becherform bildet. Die zylindrische Außenwand 25 des Gehäuses 23 ist nicht unmittelbar an der (nicht dargestellten) Seitenwand 6 abgestützt, sondern endet an der Wurzel der Schürze 14 des Kerns 10. Um das Gehäuse 23 ebenfalls an der Seitenwand 6 abzustützen, ist an die Außenwand 25 wiederum eine umlaufende elastische kegelförmige Schürze 30 angeformt, deren große Grundfläche an der Seitenwand 6 anliegt. Die zwei Schürzen 14, 30 sorgen somit für eine elastische und flüssigkeitsdichte Klemmung des Befestigungselements 2 an der Wand 6, die gegen Schwankungen der Dicke der Wand 6 tolerant ist und überdies, wie man insbesondere in Fig. 9 erkennt, einen Durchtritt von in flüssigen Ausgangskomponenten verarbeiteten Isolierschaum ins Innere des Befestigungselements 2 entlang der W and 6 zuverlässig verhindert.

Die jeweils mit ihren offenen Seiten voran ineinander gesteckten Becher von Kern 10 und Gehäuse 23 umschließen einen Hohlraum 27. Dieser Hohlraum 27 ist vorgesehen, um den vorderen Befestigungshaken 8 der Teleskopschiene 4 aufzunehmen.

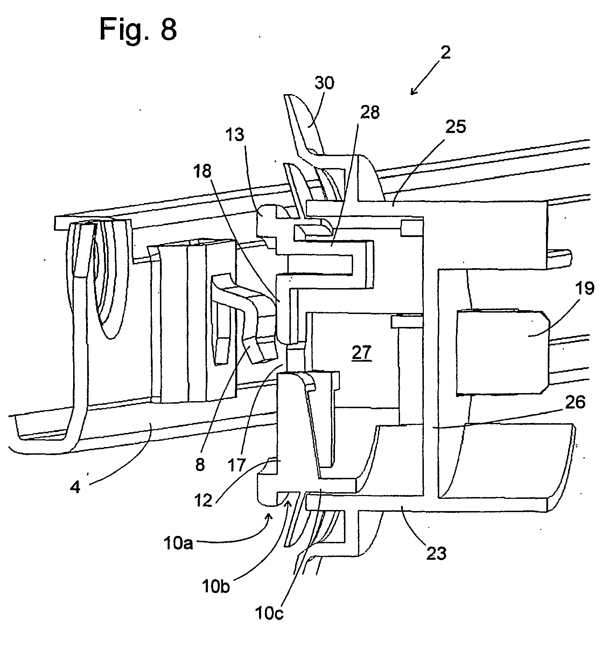

Fig. 8 zeigt das Befestigungselement 2 und die Teleskopschiene 4 in einer Stellung unmittelbar vor ihrer Anbringung am Befestigungselement 2. Ein im wesentlichen vertikal nach unten verlaufender Endabschnitt des Befestigungshakens 8 liegt dem Verriegelungskörper 18 des Kopfs 10a gegenüber. Der vertikale Abschnitt des Hakens 8 ist höher als die offene Querschnittsfläche der Aufnahmeöffnung 17. Um den Haken 8 in die Aufnahmeöffnung 17 einzuführen, muss daher der Verriegelungskörper 18 ins Innere des Hohlraums 27 zurückgedrängt werden. Dies ist möglich, da der Verriegelungskörper 18 mit dem Kern 10 nicht starr, sondern elastisch über eine haarnadelförmige Feder 28 verbunden ist. Der Haken 8 kann daher entgegen der Rückstellkraft der Feder 28 weit genug in den Hohlraum 27 eingeführt werden, um anschließend in einer Abwärtsbewegung hinter der Stirnwand 12 einzugreifen. Durch diese Abwärtsbewegung kommt der Verriegelungskörper 18 frei und kehrt in seine mit der Stirnwand 12 bündige Ruhestellung zurück.

Das Ergebnis ist in Fig. 9 gezeigt.

Um aus der in Fig. 9 gezeigten Stellung den Haken 8 wieder zu lösen, müsste er aufwärts bewegt werden, was der Verriegelungskörper 18 aber nur so weit zulässt, bis dadurch der Spalt 29 zwischen den zwei Schenkeln der haarnadelförmigen Feder 28 geschlossen ist. Dieser Hub reicht jedoch nicht aus, um den Haken 8 von der Stirnwand 12 zu lösen. Ein unbeabsichtigtes Freikommen des Hakens 8 ist damit ausgeschlossen. Im Bedarfsfall kann die Teleskopschiene 4 aber dennoch demontiert werden, indem zunächst der Verriegelungskörper 18 mit Hilfe eines spitzen Gegenstandes wie etwa eines Schraubenziehers zurückgedrängt wird, der schräg von oben zwischen der Wand 6 und der Teleskopschiene 4 hindurch in die Durchbrechung eingeführt werden kann.

An der Rückwand 26 des Gehäuses 23 befinden sich zwei Öffnungen 33 für den Durchtritt der Rastarme 19. Die Öffnungen sind jeweils an einem Rand durch von der Rückwand 26 abstehende Stege 31 (siehe Fig. 6) begrenzt, an deren rückwärtiger Kante jeweils die Einhakflächen 21 der Rastarme 19 angreifen. Um den Durchtritt von Schaum auch an den Öffnungen 33 zu unterbinden, sind die Rastarme 19 jeweils mit einer (in den Fig. verdeckten) Schulter versehen, die an der Innenseite der Rückwand 26 anliegt und die Öffnung 33 versperrt. Von der Rückwand 26 abstehende Flügel 36 geben dem Gehäuse 23 zusätzlichen Halt, wenn sie nach Abschluss der Montage des Kältegeräts von Isolierschaum umgeben sind.

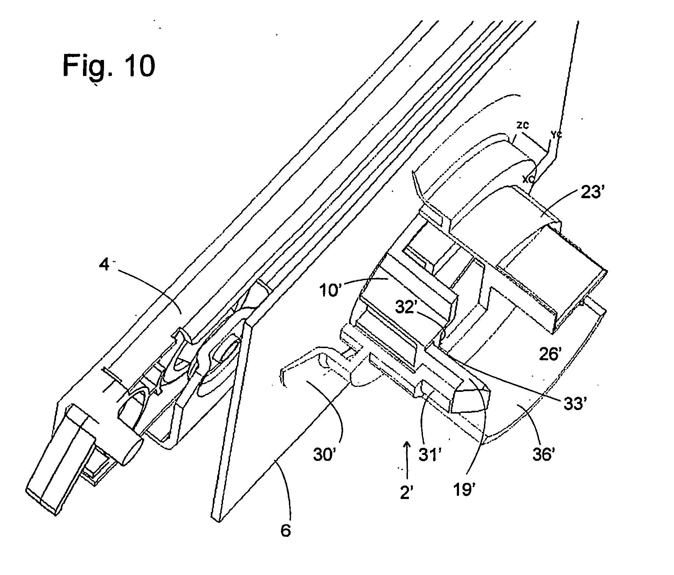

Fig. 10 zeigt eine abgewandelte Ausgestaltung eines vorderen Befestigungselements 2' an der Wand 6, wobei ein Viertel des Gehäuses 23' des Befestigungselements weggeschnitten ist, um das Innenteil 10' sichtbar zu machen. In dieser Darstellung ist die an der Rückwand 26' des Gehäuses 23' anliegende Schulter 32' gut zu erkennen, die den freien Querschnitt der Öffnung 33' in der Rückwand versperrt.

Der wesentliche Unterschied zwischen dieser Ausgestaltung und der zuvor beschriebenen ist, dass hier die Schürze am Innenteil 10' entfallen ist. Das Befestigungselement ist nur durch die Klemmkraft zwischen der Schürze 30' des Gehäuses 23' und den in der Fig. nicht sichtbaren Vorsprüngen am Kopf des Innenteils 10' gehalten.

Die Vorsprünge des Innenteils 10' können die gleiche Gestalt haben wie in Fig. 5 gezeigt. Aufgrund d es Wegfalls der Schürze ist es jedoch auch möglich, den Kern 10' von der Innenseite der Wand 6 her in die Durchbrechung 7 einzuführen. Die Vorsprünge können daher bei dieser Ausgestaltung auch zu einem umlaufenden Steg verschmolzen sein, der die Durchbrechung 7 an der Innenseite der Wand 6 vollständig überdeckt. Da das Innenteil 10' nicht durch Verdrehen in der Durchbrechung 7 verankert wird, können er und die Durchbrechung 7 weitgehend beliebige, vorzugsweise unrunde Querschnitte aufweisen.

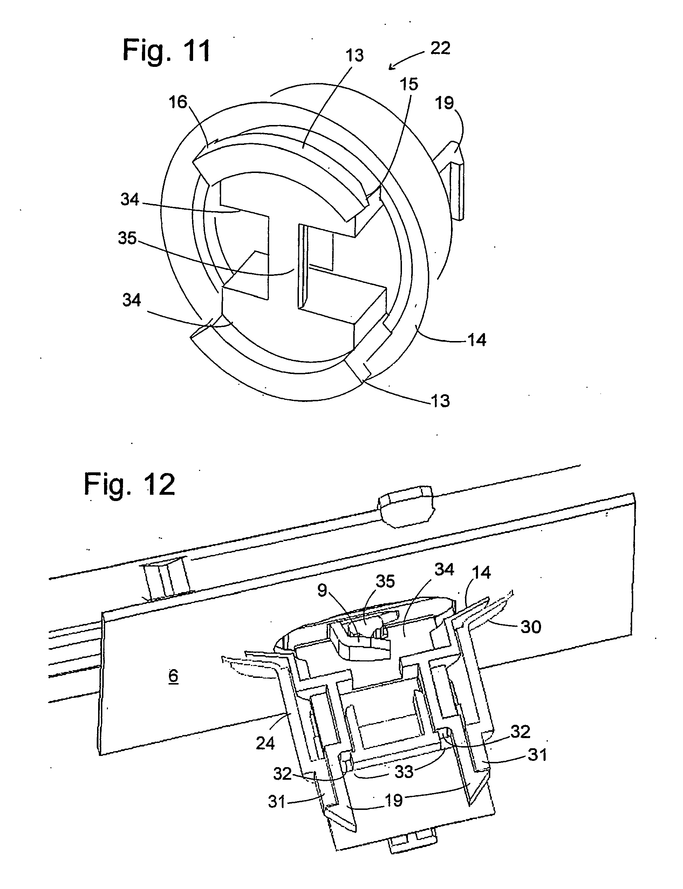

Fig. 11 zeigt eine perspektivische Ansicht des Innenteils 22 des hinteren Befestigungselements 3, gesehen von der Innenseite. Die zylindrische Außenwand ist hier in ihrem vorderen Bereich auf zwei kräftige Arme 34 reduziert, die Vorsprünge 13 tragen. Zwischen den Armen 34 erstreckt sich ein vertikaler Balken 35, der vorgesehen ist, um von dem hinteren Befestigungshaken 9 der Teleskopschiene 4 umgriffen zu werden. Eine Verriegelung des Hakens 9 am hinteren Befestigungselement ist nicht vorgesehen. Sie ist nicht erforderlich, da ein Freikommen des hinteren Befestigungshakens 9 von dem Befestigungselement 3 nur möglich ist, wenn der vordere Haken 8 von seinem Befestigungselement gelöst ist. So genügt es, nur den vorderen Haken 8 zu entriegeln, um die Teleskopschiene 4 entfernen zu können.

Fig. 12 zeigt das gleiche Befestigungselement 3 perspektivisch von oben, geschnitten entlang einer horizontalen Mittelebene. Man erkennt den hinter den Balken 35 eingreifenden Befestigungshaken 9, sowie die Verrastung der Rastarme 19 an Stegen 31 des Gehäuses 24. Auch hier sind die von den Rastarmen 19 durchgriffenen Öffnungen 33 des Gehäuses durch eine innen anliegende Schulter 32 an der Basis der Rastarme 19 versperrt.

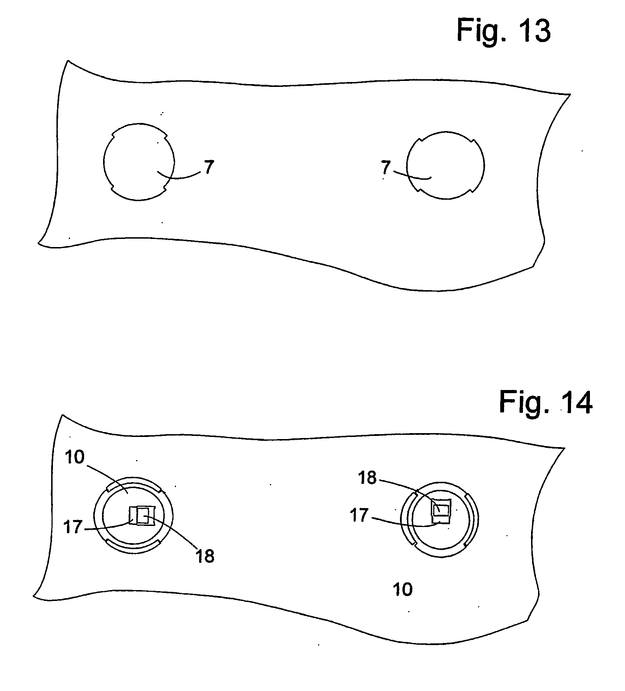

Fig. 13 zeigt einen Ausschnitt aus einer Seitenwand 6 eines Kältegeräts gemäß einer weiteren Abwandlung der Erfindung. Dargestellt sind zwei Durchbrechungen 7 in dieser Seitenwand 6, die jeweils die gleiche Querschnittsfläche haben wie die Durchbrechungen 7 in Fig. 3, mit dem einzigen Unterschied d ass d er Umriss d er z um Aufnehmen eines hinteren Befestigungselements vorgesehenen Durchbrechung, d. h. der linken Durchbrechung 7 in Fig. 13, gegenüber der rechten Durchbrechung 7 um 90° verdreht ist. Dies erlaubt die Montage des in Fig. 5 gezeigten Innenteils 10 sowie des zugehörigen, in Fig. 6 gezeigten Gehäuses 23 in den zwei Durchbrechungen 7 in jeweils um 90° verdrehten Orientierungen, wie in Fig. 14 gezeigt. So wird nur ein einziger Typ von Befestigungselement benötigt, um beide Haken 8 und 9 der Teleskopschiene 4 aufzunehmen.

## Patentansprüche

1. Kältegerät mit einem Innenbehälter (1) und einem Befestigungselement zum Befestigen einer Teleskopschiene (4) an dem Innenbehälter (1), welches einen Kopf (10a), einen Hals (10b) und einen Fuß (10c, 23), die in Richtung einer Achse (A) aufeinanderfolgend angeordnet sind, aufweist, wobei der Hals (10b) einen Umkreis mit einem ersten Radius aufweist, der Fuß (10c, 23) wenigstens eine über den Umkreis überstehende Schürze (14, 30) mit einem zweiten Radius aufweist, der größer als der erste Radius ist, und der Kopf (10a) auf einem Teil seines Umfangs über den ersten Radius überstehende seitliche Vorsprünge (13) trägt, wobei die Schürze (14, 30) elastisch ist,
**dadurch gekennzeichnet, dass** der Kopf (10a) eine Einführöffnung (17) zum Einführen eines Hakens (8) der Teleskopschiene (4) aufweist.

2. Kältegerät nach Anspruch 1, **dadurch gekennzeichnet, dass** eine Aufhängung für den zu befestigenden Gegenstand an dem Kopf (10a) ausgebildet ist.

3. Kältegerät nach einem der vorhergehenden Ansprüche, **dadurch gekennzeichnet, dass** die Schürze (14) einteilig mit dem Kopf (10a) verbunden ist.

4. Kältegerät nach einem der Ansprüche 1 bis 3, **dadurch gekennzeichnet, dass** das Befestigungselement eine weitere Schürze (30) aufweist, die die Schürze (14) umgibt.

5. Kältegerät nach einem der vorhergehenden Ansprüche, **dadurch gekennzeichnet, dass** der Fuß (10c; 23) zweiteilig aus einem Kern (10c) und einem den Kern (10c) überdeckenden Gehäuse (23) aufgebaut ist.

6. Kältegerät nach Anspruch 4 und 5, **dadurch gekennzeichnet, dass** das Gehäuse (23) die weitere Schürze (30) trägt.

7. Kältegerät nach einem der Ansprüche 5 oder 6, **dadurch gekennzeichnet, dass** der Kern (10c) und das Gehäuse (23) miteinander lösbar verbunden sind.

8. Kältegerät nach Anspruch 7, **dadurch gekennzeichnet, dass** der Kern (10c) wenigstens ein Rastelement (19) aufweist, das eine Öffnung (33) in einer Rückwand (26) des Gehäuses (23) durchgreift, wobei im verrasteten Zustand eine Schulter (32) des Rastelements (19) die Öffnung (33) versperrt.

9. Kältegerät nach einem der voranstehenden Ansprüche, **dadurch gekennzeichnet, dass** in der Einführöffnung (17) ein elastisch ins Innere des Befestigungselements verdrängbarer Verriegelungskörper (18) angeordnet ist.

10. Kältegerät nach Anspruch 9, **dadurch gekennzeichnet, dass** der Verriegelungskörper (18) mit dem Kopf (10a) durch eine haarnadelförmige Feder (28) verbunden ist.

11. Kältegerät nach einem der Ansprüche 1 bis 10 mit wenigstens einem in eine Durchbrechung (7) des Innenbehälters (6) eingesetzten Befestigungselement, wobei der Fuß (10c, 23) sich an einer ersten Seite des Innenbehälters (6) und der Kopf (10a) auf einer zweiten Seite des Innenbehälters (6) befindet und die Schürze (14, 30) an der ersten Seite anliegt, **dadurch gekennzeichnet, dass** der Kopf (10a) zwischen einer ersten Orientierung, in der er durch die Durchbrechung (7) hindurch passt, und einer zweiten Orientierung drehbar ist, in der Vorsprünge (13) des Kopfes (10a) über die Durchbrechung (7) seitlich hinausgreifen und an der zweiten Seite des Innenbehälters (6) anliegen.

12. Kältegerät nach Anspruch 11, **dadurch gekennzeichnet, dass** die Schürze (14, 30) die Durchbrechung (7) vollständig abdeckt.

13. Kältegerät nach Anspruch 11 oder 12, **dadurch gekennzeichnet, dass** die Durchbrechung (7) einen aus konzentrischen Kreisbogenstücken mit zwei verschiedenen, einander abwechselnden Radien zusammengesetzten Rand hat.

14. Kältegerät nach einem der Ansprüche 11 bis 13, **dadurch gekennzeichnet, dass** die Teleskopschiene (4) eine Auszugschiene ist.

15. Kältegerät nach Anspruch 14, **dadurch gekennzeichnet, dass** die Auszugschiene einen vertikalen (8) und einen horizontalen Haken (9) aufweist, dass der vertikale Haken (8) in die Einführöffnung (17) eines Befestigungselements (2) nach Anspruch 9 eingreift, und dass der horizontale Haken (9) in ein Befestigungselement (3) eingreift, das keine Verriegelung aufweist.

## Claims

1. Refrigerating appliance with an inner container (1) and a fastening element for fastening a telescopic rail (4) to the inner container (1), which has a head (10a), a neck (10b) and a foot (10c, 23), which are arranged in succession in the direction of an axis (A), wherein the neck (10b) has a circumcircle with a first radius, the foot (10c, 23) has at least one skirt (14, 30), which projects beyond the circumcircle, with a second radius which is larger than the first radius, and the head (10a) on a part of the circumference thereof carries lateral projections (13) projecting beyond the first radius, wherein the skirt (14, 30) is resilient, **characterised in that** the head (10a) has an insertion opening (17) for insertion of a hook (8) of the telescopic rail (4).

2. Refrigerating appliance according to claim 1, **characterised in that** a suspension for the article to be fastened is formed at the head (10a).

3. Refrigerating appliance according to one of the preceding claims, **characterised in that** the skirt (14) is connected integrally with the head (10a).

4. Refrigerating appliance according to any one of claims 1 to 3, **characterised in that** the fastening element has a further skirt (30) which surrounds the skirt (14).

5. Refrigerating appliance according to any one of the preceding claims, **characterised in that** the foot (10c; 23) is constructed in two parts from a core (10c) and a housing (23) covering the core (10c).

6. Refrigerating appliance according to claim 4 and 5, **characterised in that** the housing (23) carries the further skirt (30).

7. Refrigerating appliance according to one of claims 5 and 6, **characterised in that** the core (10c) and the housing (23) are detachably connected together.

8. Refrigerating appliance according to claim 7, **characterised in that** the core (10c) has at least one detent element (19) which engages through an opening (33) in a rear wall (26) of the housing (23), wherein in the detented state a shoulder (32) of the detent element (19) blocks the opening (33).

9. Refrigerating appliance according to any one of the preceding claims, **characterised in that** the locking body (18) resiliently displaceable in the interior of the fastening element is arranged in the insertion opening (17).

10. Refrigerating appliance according to claim 9, **characterised in that** the locking body (18) is connected with the head (10a) by a hairpin-shaped spring (28).

11. Refrigerating appliance according to any one of claims 1 to 10 with at least one fastening element inserted into a passage (7) of the inner container (6), wherein the foot (10c, 23) is disposed at a first side of the inner container (6) and the head (10a) on a second side of the inner container (6) and the skirt (14, 30) bears against the first side, **characterised in that** the head (10a) is rotatable between a first orientation, in which is fits through the passage (7), and a second orientation, in which projections (13) of the head (10a) engage laterally beyond the passage (7) and bear against the second side of the inner container (6).

12. Refrigerating appliance according to claim 11, **characterised in that** the skirt (14, 30) completely covers the passage (7).

13. Refrigerating appliance according to claim 11 or 12, **characterised in that** the passage (7) has an edge composed of concentric arcuate members with two different radii in alternation with one another.

14. Refrigerating appliance according to any one of claims 11 to 13, **characterised in that** the telescopic rail (4) is a pull-out rail.

15. Refrigerating appliance according to claim 14, **characterised in that** the pull-out rail has a vertical hook (8) and a horizontal hook (9), that the vertical hook (8) engages in the insertion opening (17) of a fastening element (2) according to claim 9 and that the horizontal hook (9) engages in a fastening element (3) which does not have locking.

## Revendications

1. Appareil frigorifique comprenant une enceinte (1) et un élément de fixation destiné à fixer un rail télescopique (4) sur l'enceinte (1), lequel élément de fixation présente une tête (10a), un cou (10b) et un pied (10c, 23) qui sont disposés en se succédant en direction d'un axe (A), le cou (10b) présentant un pourtour ayant un premier rayon, le pied (10c, 23) présentant au moins un tablier (14, 30) en saillie sur le pourtour, avec un deuxième rayon supérieur au premier rayon, et la tête (10a) portant sur une partie de sa circonférence des saillies latérales (13) dépassant sur le premier rayon, le tablier (14, 30) étant élastique,
**caractérisé en ce que** la tête (10a) présente une ouverture d'introduction (17) pour introduire un crochet (8) du rail télescopique (4).

2. Appareil frigorifique selon la revendication 1, **caractérisé en ce qu'**une suspension pour l'objet à fixer est réalisée sur la tête (10a).

3. Appareil frigorifique selon l'une quelconque des revendications précédentes, **caractérisé en ce que** le tablier (14) est relié d'une seule pièce à la tête (10a).

4. Appareil frigorifique selon l'une quelconque des revendications 1 à 3, **caractérisé en ce que** l'élément de fixation présente un tablier supplémentaire (30) qui entoure le tablier (14).

5. Appareil frigorifique selon l'une quelconque des revendications précédentes, **caractérisé en ce que** le pied (10c ; 23) est assemblé en deux parties à partir d'un noyau (10c) et d'un boîtier (23) recouvrant le noyau (10c).

6. Appareil frigorifique selon les revendications 4 et 5, **caractérisé en ce que** le boîtier (23) porte le tablier supplémentaire (30).

7. Appareil frigorifique selon l'une quelconque des revendications 5 ou 6, **caractérisé en ce que** le noyau (10c) et le boîtier (23) sont reliés entre eux de manière amovible.

8. Appareil frigorifique selon la revendication 7, **caractérisé en ce que** le noyau (10c) présente au moins un élément d'enclenchement (19) qui a prise en traversant une ouverture (33) dans une paroi arrière (26) du boîtier (23), une épaule (32) de l'élément d'enclenchement (19) bloquant l'ouverture (33) à l'état enclenché.

9. Appareil frigorifique selon l'une quelconque des revendications précédentes, **caractérisé en ce qu'**un corps de verrouillage (18) déplaçable élastiquement à l'intérieur de l'élément de fixation est disposé dans l'ouverture d'introduction (17).

10. Appareil frigorifique selon la revendication 9, **caractérisé en ce que** le corps de verrouillage (18) est relié à la tête (10a) au moyen d'un ressort (28) en forme de pince à cheveux.

11. Appareil frigorifique selon l'une quelconque des revendications 1 à 10 comprenant au moins un élément de fixation inséré dans un passage (7) de l'enceinte (6), le pied (10c, 23) se trouvant sur un premier côté de l'enceinte (6) et la tête (10a) se trouvant sur un deuxième côté de l'enceinte (6) et le tablier (14, 30) étant adjacent au premier côté, **caractérisé en ce que** la tête (10a) est rotative entre une première orientation, dans laquelle elle traverse le passage (7), et une seconde orientation, dans laquelle des saillies (13) de la tête (10a) ont prise latéralement au-delà du passage (7) et sont adjacentes au deuxième côté de l'enceinte (6).

12. Appareil frigorifique selon la revendication 11, **caractérisé en ce que** le tablier (14, 30) recouvre complètement le passage (7).

13. Appareil frigorifique selon la revendication 11 ou 12, **caractérisé en ce que** le passage (7) a un bord assemblé à partir de pièces concentriques d'arcs de cercle ayant deux rayons différents alternant l'un à l'autre.

14. Appareil frigorifique selon l'une quelconque des revendications 11 à 13, **caractérisé en ce que** le rail télescopique (4) est un rail à rallonges.

15. Appareil frigorifique selon la revendication 14, **caractérisé en ce que** le rail à rallonges présente un crochet vertical (8) et un crochet horizontal (9), **en ce que** le crochet vertical (8) a prise dans l'ouverture d'introduction (17) d'un élément de fixation (2) selon la revendication 9, et **en ce que** le crochet horizontal (9) a prise dans un élément de fixation (3) qui ne présente pas de verrouillage.
